# DEMANDE DE BREVET EUROPEEN

(11) **EP 0 692 770 A1**
(43) Date de publication de la demande: **17.01.1996**
(21) Numéro de dépôt: 95400790.2
(22) Date de dépôt: 07.04.1995
(51) Int. Cl.: G06K 19/077

(54) **Procédé de fabrication d'une carte sans contact par surmoulage et carte sans contact obtenue par un tel procédé**

(30) Priorité: 22.06.1994 FR 9407675
(71) Demandeur: GEMPLUS CARD INTERNATIONAL, F-13420 Gemenos (FR)
(72) Inventeur: Bertrand, Pierre, Cabinet Ballot Schmit, F-75116 Paris (FR); Fidalgo, Jean-Christophe, Cabinet Ballot Schmit, F-75116 Paris (FR)
(74) Mandataire: Schmit, Christian Norbert Marie

(57) **Abrégé**

Procédé de fabrication d'une carte sans contact (1) comportant un corps de carte (2) comprenant une antenne (4) connectée à un circuit intégré formant une électrique (3) noyée dans la carte (1). On place un insert comportant l'électronique (3) dans une cavité (9) d'un module (10,11) dans laquelle on injecte une matière plastique destinée à couvrir entièrement ledit insert et à former une épaisseur du corps de carte (2) que l'on démoule. L'invention s'applique, en particulier, à la fabrication d'une carte sans contact de format standard destinée, par exemple, aux applications de type télébillétique.

## Description

L'invention concerne un procédé de fabrication d'une carte sans contact comportant un corps de carte comprenant une antenne connectée à un circuit intégré formant une électronique noyée dans la carte.

De telles cartes sont destinées à la réalisation de diverses opérations, telles que, par exemple, des opérations bancaires, des communications téléphoniques, diverses opérations d'identification, ou des opérations de type télébillétique dans lesquelles lesdites cartes sont débitées à distance d'un certain nombre d'unités lors d'un passage à proximité d'une borne et où elles peuvent être rechargées à distance également. Ces opérations s'effectuent grâce à un couplage électromagnétique entre l'électronique de la carte et un appareil récepteur ou lecteur. Ce couplage est réalisé en mode lecture ou en mode lecture/écriture et la transmission des données s'effectue par radiofréquence ou hyperfréquence.

Telles qu'elles sont réalisées actuellement, les cartes sans contact sont, de même que les cartes à contacts, des objets portables de faible épaisseur dont les dimensions sont normalisées. La norme usuelle ISO 7810 correspond à une carte de format standard de 85 mm de longueur, de 54 mm de largeur, et de 0,76 mm d'épaisseur.

Toutefois, et contrairement aux cartes sans contact, les cartes à contacts ne comportent pas d'antenne mais des métallisations disposées affleurantes à un endroit précis du corps de carte et destinées à venir au contact d'une tête de lecture d'un lecteur en vue d'une transmission électrique des données.

Or, l'antenne d'une carte sans contact est formée, en général, de multiples spires d'éléments conducteurs de très faible diamètre. Ces spires ont des dimensions voisines de la surface du corps de carte. L'antenne d'une carte sans contact est donc particulièrement délicate à manipuler et d'une grande fragilité.

En conséquence, les procédés de fabrication des cartes à contacts ne sont pas susceptibles de s'appliquer à la fabrication de cartes sans contact, et ce, même si l'on connaît un procédé de fabrication de carte sans contact déjà connu pour la fabrication de carte à contacts, qui met en oeuvre une technique dite de colamination, selon laquelle : on dépose, entre deux plateaux d'une presse, un empilement de feuilles thermoplastiques au milieu duquel on place l'électronique sans contact, et on soude ces différentes feuilles thermoplastiques en appliquant pression et température.

La présente invention a pour but de proposer un nouveau procédé de fabrication d'une carte sans contact qui permette, en particulier, l'obtention à moindre coût de cartes en série, sans que des difficultés de manipulation ou de fragilité de l'antenne constituent une limitation de ce procédé.

Ce but, ainsi que d'autres qui apparaîtront par la suite, sont atteints grâce à un procédé de fabrication d'une carte sans contact par surmoulage.

Aussi, l'invention a pour objet un procédé de fabrication d'une carte sans contact comportant un corps de carte comprenant une antenne connectée à un circuit intégré formant une électronique noyée dans la carte, caractérisé en ce qu'on place un insert comportant l'électronique dans une cavité d'un moule dans laquelle on injecte une matière plastique fluide destinée à couvrir entièrement ledit insert et à former une épaisseur du corps de carte que l'on démoule.

La description qui va suivre, et qui ne présente aucun caractère limitatif, permettra de mieux comprendre la manière dont l'invention peut être mise en pratique.

Elle doit être lue au regard des dessins annexés, dans lesquels :
- la figure 1 illustre, en perspective, une première étape d'injection dans un moule selon un premier mode de mise en oeuvre du procédé de l'invention ;
- la figure 2 illustre, en perspective, une seconde étape d'injection dans un moule selon le premier mode de mise en oeuvre précité du procédé de l'invention ;
- la figure 3 montre, en perspective, une carte obtenue par le procédé selon l'invention ;
- la figure 4 illustre, en perspective, une injection selon un second mode de mise en oeuvre du procédé de l'invention ;
- la figure 5 montre, en perspective, un support ou carcasse destiné à faciliter la mise en oeuvre du second mode précité ;
- la figure 6 illustre, en perspective, une injection selon un troisième mode de mise en oeuvre du procédé de l'invention ; et
- la figure 7 montre, en perspective, une carte obtenue par le troisième mode de mise en oeuvre précité du procédé de l'invention.

L'invention concerne un procédé de fabrication d'une carte sans contact 1.

Une telle carte 1 comprend un corps de carte 2 et une électronique 3 noyée dans ledit corps de carte 2.

Le corps de carte 2 forme un parallélépipède rectangle de très faible épaisseur. En pratique, cette épaisseur est inférieure à 1 mm. Il est composé de deux couches de matière plastique au moins. Cette matière peut être, par exemple, un PVC (polychlorure de vinyle), un ABS (acrylonitrile-butadiène-styrène), un PET (polyéthylène), un PC (polycarbonate), ou un polyamide.

L'électronique 3 de la carte 1 est formée d'une antenne 4 connectée à un circuit intégré.

L'antenne 4 est, en général, constituée par un fil conducteur recouvert d'un vernis isolant et d'une colle thermoactivable. Le diamètre de ce fil est très faible, par exemple, de 30 à 150 microns. Il est enroulé de manière à former une bobine de multiples spires liées entre elles par la colle thermoactivable. La conformation de l'antenne 4 est telle qu'elle possède avantageusement des dimensions à peine plus faibles que les dimensions hors tout du corps de carte 2.

Toutefois, l'antenne 4 peut être formée d'un diélectrique métallisé ou contre-collé avec du métal, ou d'une feuille de métal estampée. Elle peut fonctionner en radiofréquence (de quelques KHz à plusieurs MHz) ou en hyperfréquence (quelques GHz). De même que dans le cas du fil bobiné, de telles antennes 4 sont fragiles et difficilement manipulables puisque leur épaisseur est faible, comparable au diamètre du fil bobiné.

Bien entendu, les modes de réalisation précités ne sont pas limitatifs et l'antenne 4 peut prendre toutes les formes possibles.

Le circuit intégré est contenu dans un module 5 composé d'une puce 6, disposée sur un support diélectrique 7 réalisé, par exemple, en verre époxy ou en polyimide, et enrobée de résine. Ce module 5 est disposé à proximité de l'antenne 4, dans un coin de celle-ci. Il comporte deux plages de contact 8 connectées aux bornes de connexion de la puce 6 par des fils de connexion.

Les deux extrémités du fil formant l'antenne 4 sont connectées aux plages de contact 8 du module 5, par exemple, en utilisant un procédé de soudage par thermocompression, ou tout autre procédé de soudage, ou un collage assurant une liaison à la fois mécanique et électrique.

Pour la fabrication du module 5, on fixe la puce 6 sur le support isolant 7 par une colle souvent conductrice de l'électricité telle qu'une colle époxy chargée argent. On connecte ensuite la puce 6 aux plages de contact 8 et on protège l'ensemble par une goutte de résine de protection. Il est cependant envisageable de connecter les deux fils de l'antenne directement à la puce sans passer par l'intermédiaire d'un circuit imprimé. Dans ce cas, la puce comporte, sur ses plots de connexion, des excroissances ou "bumps" permettant un soudage direct par thermocompression.

Pour la fabrication de l'antenne 4, on effectue, par exemple, un bobinage du fil conducteur autour d'un noyau qui donne sa conformation rectangulaire à l'antenne 4 et qui comporte avantageusement une cavité où l'on place le module électronique 5. Pendant le bobinage, les extrémités du fil de l'antenne 4 sont maintenues et, à la fin du bobinage, elles sont directement soudées aux plages de contact S du module 5, formant ainsi l'électronique 3 de la carte 1.

Dans le cas d'une antenne imprimée, on peut graver chimiquement un ruban de cuivre. Le microcircuit peut ensuite être directement reporté sur l'antenne puis connecté aux deux extrémités de celle-ci.

Selon l'invention, on place un insert comportant l'électronique 3 dans une cavité 9 d'un moule 10, 11 dans laquelle on injecte une matière plastique fluide destinée à couvrir ledit insert et à former une épaisseur du corps de carte 1 que l'on démoule.

L'insert peut être formé de l'électronique nue 3, de cette électronique 3 disposée sur une feuille de thermoplastique 14, ou alors, emprisonnée entre deux de ces feuilles 14, 15.

Le moule 10, 11 est composé de deux pièces qui, lorsqu'elles sont assemblées, délimitent, à leur interface, la cavité 9 aux dimensions, longueur et largeur, de la carte 1 que l'on veut obtenir.

Lorsque ces deux pièces 10 et 11 sont disjointes, elles découvrent la cavité 9. On place alors l'insert comportant l'électronique 3 grâce, par exemple, à un bras manipulateur. L'insert peut être maintenu dans la cavité 9 par gravité ou par dépression.

Après avoir refermé le moule 10, 11, on injecte la matière plastique fluide dans un canal 12 ménagé dans la pièce 10, 11 qui comporte l'évidement formant la cavité 9. Ce canal 12 relie un dispositif d'injection de l'extérieur du moule 10, 11 et débouche dans la cavité 9, par exemple, sur le chant de celle-ci.

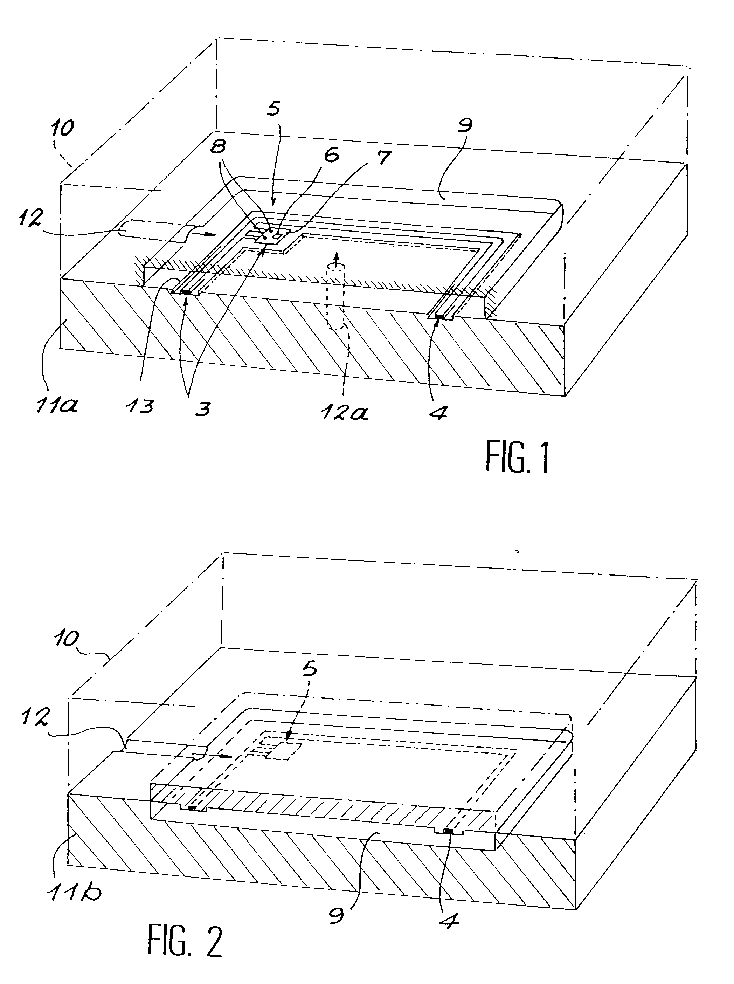

Toutefois, le canal peut être réalisé dans l'une des pièces 10 ou 11 perpendiculairement au plan de jointure desdites pièces ainsi que représenté en figure 1, sous la référence 12a.

L'injection est effectuée sous une pression très importante. Une telle pression peut être de 700 kg/cm. Ainsi, malgré la faible profondeur de la cavité 9 du moule 10, 11 relativement à sa longueur et sa largeur, la matière plastique se répandra dans toute la cavité 9.

En décalant le point ou la nappe d'injection de la matière plastique par rapport à la position de l'insert comportant l'électronique 3 dans la cavité 9 du moule 10, 11, et en dirigeant l'injection vers un espace dégagé de cette cavité 9, les forces générées par l'importante pression d'injection ne s'appliquent que très partiellement sur l'antenne 4 laquelle, malgré sa fragilité, n'est pas endommagée ni déplacée dans la cavité 9.

En ce qui concerne le démoulage, on sépare les deux pièces 10 et 11 du moule, et on retire l'épaisseur du corps de carte 2, par exemple, par aspiration.

Différents modes de mise en oeuvre du procédé de l'invention sont décrits ci-dessous, en référence aux figures 1 à 6. Ces différents modes de mise en oeuvre intègrent les étapes du procédé décrites ci-dessus.

Selon un premier mode de mise en oeuvre du procédé de l'invention représenté aux figures 1 et 2, l'insert est formé de l'électronique nue 3.

On place cet insert dans un logement 13 de la pièce 11a du moule 10, 11a.

La cavité 9 est formée dans la pièce 10 de ce moule. Elle a une profondeur correspondant à environ la moitié de l'épaisseur du corps de carte 2 que l'on veut obtenir, c'est-à-dire à environ 0,38 mm. Le logement 13, destiné à recevoir l'électronique nue 3 de la carte sans contact 1, est formé d'une gorge ménagée à la surface de la pièce 11a qui débouche dans la cavité 9 et décrit un motif identique au motif que décrit l'électronique 3. La profondeur du logement 13 est inférieure à la hauteur de l'électronique 3.

Après avoir refermé le moule 10, lla, on injecte la matière plastique fluide dans la cavité 9 par le canal 12, ou alors, par le canal 12a. Cette matière, se répand dans toute la cavité 9 et couvre entièrement l'insert protégé au sein de son logement 13. On obtient ainsi, par surmoulage, un demi-corps de carte comportant, à sa surface, une électronique 3.

Ce demi-corps de carte est maintenu dans la pièce 10 du moule, par exemple, par aspiration. Les pièces 10 et 11a sont alors disjointes et une pièce 11b vient prendre la place de la pièce 11a. Cette pièce 11b comporte une cavité 9.

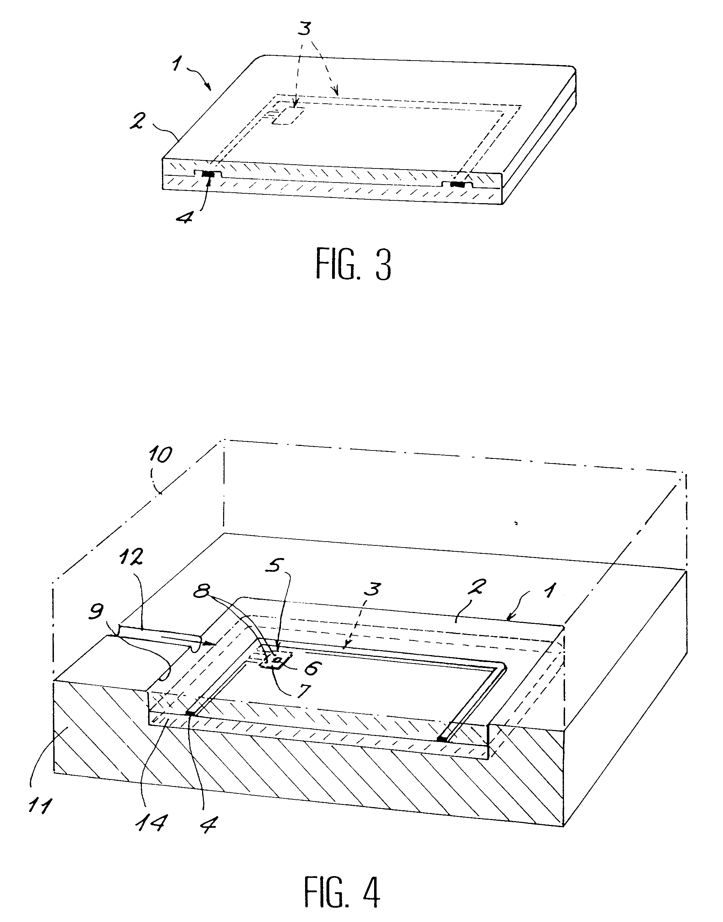

Aussi, après avoir injecté la matière plastique fluide dans la cavité 9, on obtient, par démoulage, une carte sans contact 1 telle que représentée en figure 3, formée de deux couches de matière plastique superposées à l'interface desquelles se situe l'électronique 3.

Dans ce premier mode de mise en oeuvre, on a donc procédé en deux temps, avec deux injections dans deux moules différents.

Dans le cas où on a réalisé l'injection de la première demi-carte par l'intermédiaire du canal 12a, les traces de cette injection sont recouvertes de matière injectée lors de la fabrication de la seconde demi-carte. Ces traces ne sont donc plus visibles dans la carte finalement obtenue.

Selon un second mode de mise en oeuvre du procédé de l'invention représenté en figure 4, l'insert placé dans la cavité 9 du moule 10, 11 est formé de l'électronique 3, disposée sur une feuille thermoplastique 14, et avantageusement collée sur celle-ci.

La cavité 9 du moule 10, 11 a alors l'épaisseur du corps de carte 1 et le procédé de 1' invention comporte une unique étape d'injection de matière thermoplastique qui couvre entièrement l'insert en vue que former le corps de carte 2.

Cependant, la carte 1 obtenue présentera, de même que dans le premier mode de mise en oeuvre précité, une structure en bicouche caractéristique. Cette structure est représentée en figure 3.

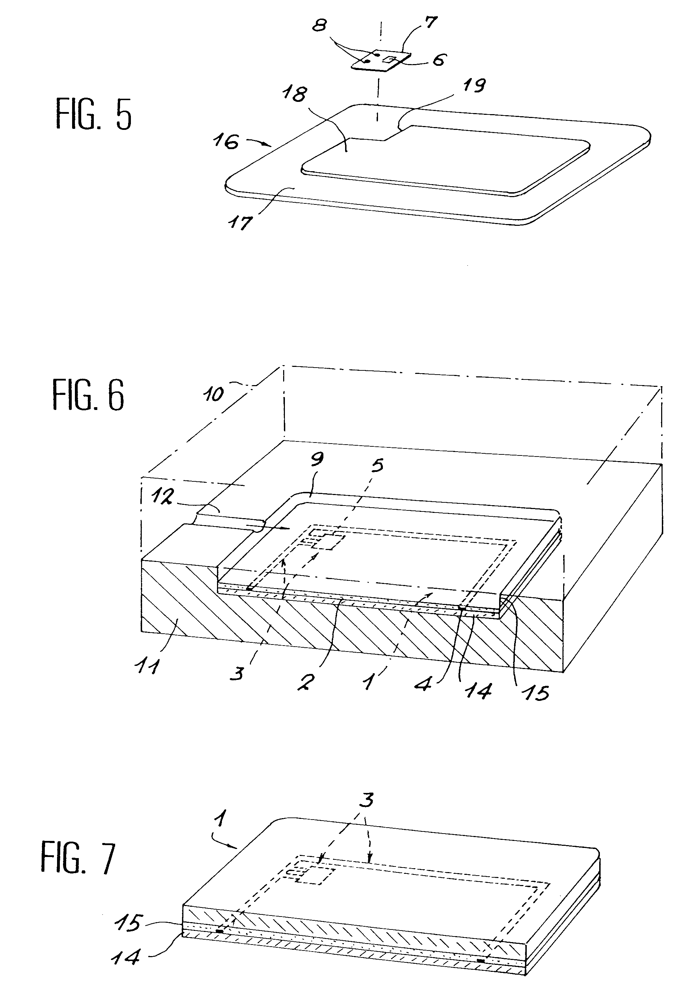

Dans une variante de ce second mode de mise en oeuvre du procédé de l'invention, on utilise, à la place de la feuille de thermoplastique 14, un support ou carcasse 16 autour duquel sont enroulés les spires de la bobine formant antenne. Cette carcasse 16, représentée en figure 5, comporte une partie 17 aux dimensions, longueur et largeur, de la carte que l'on veut obtenir. En outre, une seconde partie 18 repose sur la partie 17. Cette partie 18 a des dimensions, longueur et largeur, des spires de l'antenne. Elle comporte, en l'un de ses coins, un évidemment 19 destiné à recevoir le module 5.

Cette carcasse permet le bobinage puis le soudage du microcircuit. Elle constitue un support qui facilite la manipulation de l'électronique et accroît la résistance mécanique de la bobine en réalisant notamment un parfait maintien de l'antenne 4 pendant l'injection. L'électronique 3 sur sa carcasse 16 peut être manipulée par aspiration jusqu'au moule 10, 11 d'injection.

Selon un troisième mode de mise en oeuvre du procédé de l'invention représenté en figure 6, l'insert placé dans la cavité du moule 10, 11 est formé de l'électronique 3 disposée entre deux feuilles thermoplastique 14.

L'électronique 3 est alors totalement protégée de la pression d'injection. De plus, dans le cas où plusieurs inserts destinés chacun à la fabrication d'une carte sont disposés côte à côte le long d'un même ruban, en déroulant ce ruban le long du plan de jointure du moule 10, 11 à chaque cycle d'ouverture du moule, on obtient alors un procédé de fabrication de carte sans contact en chaîne pratique et facile à mettre en oeuvre.

Ainsi que le montre la figure 7, les cartes sans contact obtenues présentent alors, en coupe, une structure en trois couches superposées de matière plastique.

Selon le procédé de l'invention, l'antenne 4 et le module 5 sont tous deux protégés de l'injection à forte pression de matière thermoplastique. Aussi, un procédé de fabrication en chaîne en grande série peut être mis en oeuvre.

Bien entendu, le procédé de l'invention peut s'étendre à la fabrication de cartes mixtes, c'est-à-dire à la fabrication de cartes sans contact comportant en outre un module à contacts. Dans ce cas, l'une des pièces 10, 11 du moule comportera en outre un noyau destiné à former, dans la carte sans contact obtenue, une cavité dans laquelle on peut reporter un module à contacts.

## Revendications

1. Procédé de fabrication d'une carte sans contact (1) comportant un corps de carte (2) comprenant une antenne (4) connectée à un circuit intégré formant une électronique (3) noyée dans la carte (1), caractérisé en ce qu'on place un insert comportant l'électronique (3) dans une cavité (9) d'un moule (10, 11) dans laquelle on injecte une matière plastique fluide destinée à couvrir entièrement ledit insert et à former une épaisseur du corps de carte (2) que l'on démoule et en ce que l'injection de ladite matière s'effectue dans un canal (12) débouchant sur le chant de la cavité (9).

2. Procédé selon la revendication 1, caractérisé en ce qu'on injecte la matière plastique de manière à ce que, d'une part, le point d'injection soit décalé par rapport à la position de l'insert comportant l'électronique (3) dans la cavité (9) et, en ce que d'autre part, l'injection soit dirigée vers un espace dégagé de cette cavité (9).

3. Procédé selon l'une des revendications 1 ou 2, caractérisé en ce qu'on place l'insert dans un logement (13) de la cavité (9) du moule (10, 11) et en ce que cet insert est formé de l'électronique nue (4, 5).

4. Procédé selon l'une des revendications 1, 2 ou 3, caractérisé en ce qu'on injecte la matière thermoplastique en deux temps.

5. Procédé selon l'une des revendications 1 ou 2, caractérisé en ce que l'insert placé dans la cavité (9) du moule (10, 11) est formé de l'électronique (4, 5) disposée sur une feuille thermoplastique (14).

6. Procédé selon l'une des revendications 1 ou 2, caractérisé en ce que l'insert placé dans la cavité (9) du moule (10, 11) est formé de l'électronique (4, 5) disposé sur une carcasse (16).

7. Procédé selon l'une des revendications 1 ou 2, caractérisé en ce que l'insert placé dans la cavité (9) du moule (10, 11) est formé par l'électronique (4, 5) disposée entre deux feuilles thermoplastiques (14, 15).

8. Carte obtenue par le procédé selon l'une quelconque des revendications 1 à 7, caractérisée en ce qu'elle est formée de deux couches superposées de matière plastique comportant, à leur interface, l'électronique (3).

9. Carte obtenue par le procédé selon la revendication 8, caractérisée en ce qu'elle est formée de trois couches superposées de matière plastique.
